# FASCICULE DE BREVET EUROPEEN

(11) **EP 4 237 180 B1**
(45) Date de publication et mention de la délivrance du brevet: **02.10.2024**
(21) Numéro de dépôt: 21815554.7
(22) Date de dépôt: 26.10.2021
(51) Int. Cl.: B22F 10/28, B22F 12/00, B33Y 40/20, B33Y 30/00

(54) **MOYEN DE RÉCEPTION DE LA POUDRE DANS UNE MACHINE DE FABRICATION ADDITIVE**
MITTEL ZUR AUFNAHME VON PULVER IN EINER MASCHINE ZUR GENERATIVEN FERTIGUNG
MEANS FOR RECEIVING POWDER IN AN ADDITIVE MANUFACTURING MACHINE

(30) Priorité: 28.10.2020 FR 2011015
(43) Date de publication de la demande: 06.09.2023
(73) Titulaire: Safran Landing Systems, 78140 Vélizy-Villacoublay (FR)
(72) Inventeur: FREYERMUTH, Alain, 77550 Moissy-Cramayel (FR); LUTTENBACHER, Denis, 77550 Moissy-Cramayel (FR); ROYER, Vincent, 77550 Moissy-Cramayel (FR)
(74) Mandataire: Cabinet Camus Lebkiri
(86) Numéro de dépôt international: PCT/FR2021/051881
(87) Numéro de publication internationale: WO 2022/090663

(56) Documents cités:
- WO-A1-2019/094276
- US-A1- 2017 188 737
- US-A1- 2017 246 808
- US-A1- 2019 009 338

## Description

### DOMAINE TECHNIQUE DE L'INVENTION

Le domaine technique de l'invention est celui des machines de fabrication additive et plus particulièrement celles utilisant l'énergie thermique (laser ou faisceau d'électrons) pour faire fondre et fusionner les particules des régions bien déterminées d'un lit de poudres et plus particulièrement les poudres métalliques.

### ARRIERE-PLAN TECHNOLOGIQUE DE L'INVENTION

Dans les machines de fabrication additive de fines couches de poudres, ou lits, sont déposées une à une chacune fixée sur les précédentes par un faisceau laser, un système d'étalement de poudres constitué d'un racleur étale successivement chaque couche de poudres au fur et à mesure de l'avancement de la pièce.

Une fois la pièce fabriquée, le plateau sur lequel elle est construite se retrouve dans le fond d'un puit, noyée dans la poudre n'ayant pas été solidifiée. Comme l'ensemble, pour des raisons de limitation des contraintes lors de la fusion des poudres, est mis en température, il faut attendre un certain temps avant de pouvoir accéder et retirer la pièce sur son plateau de la machine, ce d'autant plus qu'il est impossible d'ouvrir la porte de la machine aussi longtemps que la température de la chambre n'est pas arrivée sous un seuil de mise en sécurité défini.

Pour des raisons de productivité évidente, l'objectif est de retirer au plus vite la pièce terminée afin de pouvoir fabriquer la suivante.

Il est possible, afin d'accélérer le refroidissement, de retirer un maximum de poudre autour de la pièce fusionnée afin de limiter la masse à refroidir. Il est donc nécessaire de faire remonter la table supportant le plateau de fusion et donc la pièce fusionnée, mais la poudre non solidifiée va se déverser dans l'enceinte de la machine, l'inondant en quelque sorte. Cela est rédhibitoire et donc interdit.

Il a été proposé de disposer un cadre dans la chambre afin d'éviter que la poudre ne se déverse de façon incontrôlée, cependant l'encombrement de ce dispositif est important. Le volume de la chambre de fusion étant restreint, l'entreposage de pièces volumineuses dans l'enceinte de l'installation pendant la phase de fabrication n'est pas permis. Il n'est donc pas possible d'utiliser ce cadre tant que la température de la pièce n'atteint pas un niveau inférieur à celle permettant l'ouverture de la chambre.

De plus, la cinématique de mise en place d'un tel dispositif étant complexe, aucun gain de temps sur le refroidissement de la pièce fabriquée. Des systèmes pour séparer la poudre non consolidée de la pièce fabriquée ont été divulgués dans les demandes de brevet US 2019/009338 A1, US 2017/246808 A1 et WO 2019/094276 A1.

### RESUME DE L'INVENTION

L'invention offre une solution aux problèmes évoqués précédemment, en proposant une machine de fabrication additive, selon la revendication 1, avec un moyen de réception des poudres qui permet de limiter le déversement des poudres dans l'enceinte de fusion, de contenir ces poudres et de les guider vers les déversoirs. Pouvant être intégré dans l'enceinte de la chambre de fusion, ce moyen n'empêche, ni ne gêne le processus de fabrication de la pièce et permet de diminuer le temps de refroidissement de la pièce et donc de réduire sensiblement la durée du temps du cycle de fabrication de la pièce.

La machine de fabrication additive selon l'invention est caractérisée en ce qu'elle comprend un moyen de réception de poudres non fusionnées comprenant quatre côtés : une cloison droite et une cloison gauche, une cloison avant et une cloison arrière, il est caractérisé en ce qu'au moins deux côtés opposés sont chacun constitué de deux parties articulées permettant le pliage desdits côtés. Le moyen étant pliable il est facile à placer dans l'enceinte de la chambre de fusion sans gêner la fabrication. Il suffit juste de le déplier manuellement via une ouverture, de type boite à gants pour pouvoir l'utiliser quand le plateau va remonter avec la pièce et la poudre non fusionnée. La poudre non fusionnée va ainsi être rapidement évacuée de façon sûre ce qui va permettre un refroidissement plus rapide de la pièce.

Le pliage peut être fait avec deux tôles avant et deux tôles arrière des cloisons avant et arrière ou sur les cloisons latérales, droite et gauche, auquel cas les cloisons avant et arrière deviendraient pleines, celles latérales se présenteraient ainsi sous forme de demi-cloisons articulées afin de toujours garantir le pliage.

Avantageusement, la cloison avant est plus petite en hauteur que la cloison arrière. La poudre non fusionnée est ainsi dirigée vers l'avant.

Avantageusement, deux patins articulés sont placés sur chacune des cloisons droite et gauche. Ces deux patins bas articulés servent d'entretoise et de support au lestage par la force qu'exerce la masse de la poudre non fusionnée s'écoulant du volume de fusion lors du relevage de la table support du plateau et de la pièce.

Avantageusement, au moins une des cloisons droite ou gauche comprend un moyen d'accrochage. Ce moyen d'accrochage sert pour le stockage du moyen de réception et peut intégrer une forme spécifique sur l'arrière adaptée à la configuration de la machine de fabrication additive.

Avantageusement, les parties articulées et/ou les patins articulés sont faits avec des charnières pleines de type piano. Ces charnières garantissent une bonne étanchéité du moyen.

Avantageusement, le pliage s'effectue vers l'intérieur et de façon symétrique. L'encombrement du moyen de réception, quand il est plié, est ainsi limité.

Avantageusement, la cloison arrière comprend une ouverture en bas. Cette ouverture permet une évacuation des poudres non fusionnées. Les caractéristiques de cette ouverture telle que sa hauteur sont liées de manière non exhaustive à un, ou plusieurs, paramètre(s) tels que les angles d'avalanche, de repos dynamique de la poudre, la distance au déversoir.

Avantageusement, les cloisons droite et gauche comprennent un dispositif de positionnement arrière. Il peut être réalisé à titre d'exemple par une excroissance sous une forme prismatique venant s'insérer dans un logement à l'intérieur de la chambre de fusion de la machine.

Avantageusement, une des cloisons droite ou gauche comprend un dispositif de positionnement latéral. Par exemple, ce dispositif de positionnement pourra être constitué par une tige ou encore par l'intermédiaire de patins adaptés pour la circonstance.

L'invention concerne également une machine de fabrication additive comprenant un moyen de réception de poudres non fusionnées selon au moins une des caractéristiques précédentes.

### BREVE DESCRIPTION DES FIGURES

Les figures sont présentées à titre indicatif et nullement limitatif de l'invention.
[Fig. 1] est une vue de face et de côté d'une machine de fabrication additive de l'état de la technique ;
[Fig. 2] est une vue en perspective du moyen de réception des poudres selon l'invention en position ouverte ;
[Fig. 3] est une vue en perspective du moyen de réception des poudres selon l'invention en position semi fermée ;
[Fig. 4] est une vue en perspective du moyen de réception des poudres selon l'invention en position fermée ;
[Fig. 5] est une vue de face et de profil d'une machine de fabrication additive selon l'invention avec le moyen de réception en position repliée ;
[Fig. 6] est une vue de face et de profil d'une machine de fabrication additive selon l'invention avec le moyen de réception en position ouverte ;
[Fig. 7] est une vue de face et de profil d'une machine de fabrication additive selon l'invention avec le moyen de réception en position ouverte avec la table en cours de relevage ;
[Fig. 8] est une vue de face et de profil d'une machine de fabrication additive selon l'invention avec le moyen de réception en position avec la table complétement relevée.

### DESCRIPTION DETAILLEE

Les figures sont présentées à titre indicatif et nullement limitatif de l'invention.

Sauf précision contraire, un même élément apparaissant sur des figures différentes présente une référence unique.

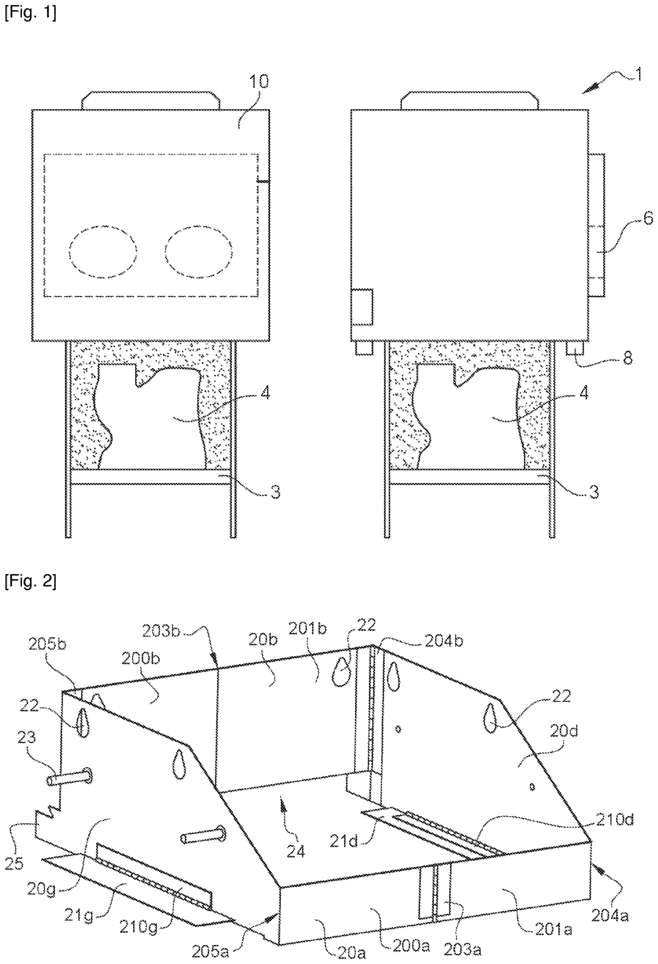

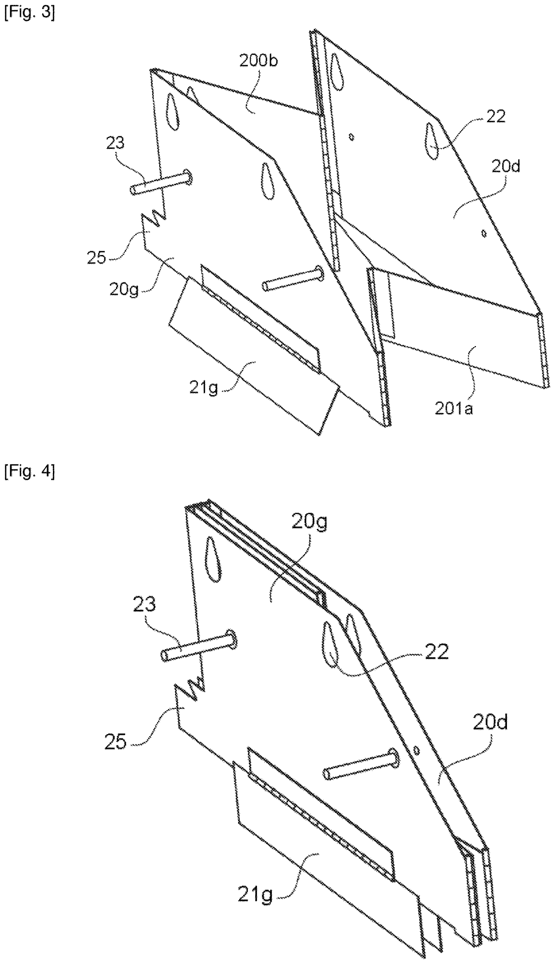

Dans toute la description on appellera « avant » la face du moyen de réception des poudres qui est devant dans les perspectives des figures 2 à 4 et arrière la face qui est derrière dans les mêmes perspectives. Le côté droit correspondra au côté droit de ces figures et le côté gauche au côté gauche des mêmes figures.

La machine de fabrication additive 1, illustrée figure 1, comprend une chambre de fusion 10 dans laquelle est disposé un plateau 3 sur lequel est réalisé une pièce 4 par fabrication additive. La chambre de fusion 10 constitue une enceinte restreinte, accessible par une ouverture 6.

Le plateau 3 va descendre au fur et à mesure de la réalisation successive des différentes couches jusqu'à la réalisation complète de la pièce 4. La poudre 5 non fusionnée va rester sur le plateau 3 pendant toute la fabrication de la pièce 4.

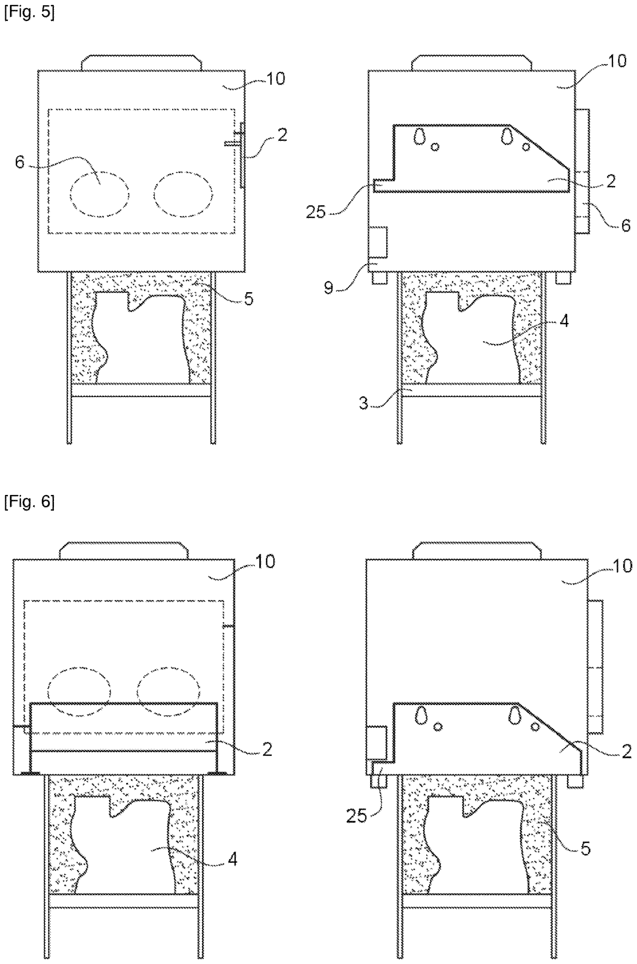

Lorsque la pièce 4 est finie, il faut remonter le plateau 3 et lors de cette remontée la poudre 5 non fusionnée va avoir tendance à se déverser sur les côtés, mais le positionnement du moyen de réception des poudres 2 selon l'invention, visible aux figures 5 à 8, va permettre de canaliser ces poudres.

Le moyen de réception des poudres 2 comprend quatre cloisons : une cloison droite 20d et une cloison gauche 20g, une cloison avant 20a et une cloison arrière 20b.

La cloison avant 20a est moins haute que la cloison arrière 20b afin d'accéder aux poudres 5 par l'ouverture 6. La cloison avant 20a présente une ouverture 24 en partie basse pour permettre l'évacuation de la poudre 5 par gravité vers des dispositifs de récupération des poudres 8.

La cloison avant 20a est sous la forme de deux demi-cloisons 200a et 201a articulées entre elles par une articulation 203a, et articulées à l'extrémité droite à la cloison droite 20d par une articulation 204a et à l'extrémité gauche à la cloison gauche 20g par une articulation 205a.

De la même façon, la cloison arrière 20b est sous la forme de deux demi-cloisons 200b et 201b articulées entre elles par une articulation 203b, et articulées à l'extrémité droite à la cloison droite 20d par une articulation 204b et à l'extrémité gauche à la cloison gauche 20g par une articulation 205b.

Les cloisons droite 2d et gauche 2g supportent chacune un patin articulé 21d et 21 g dans leur partie inférieure par une articulation 210d et 210g. Ces patins 21d et 21g garantissent la stabilisation par la pression de la masse de la poudre 5 qui vient se déverser par-dessus et permettent d'éviter le soulèvement dudit moyen. Les patins 21d et 21g sont repliés manuellement.

Les cloisons présentent des moyens d'accrochage 22 permettant le rangement dudit moyen de réception 2 dans la chambre 10 dans une zone n'interférant pas avec le ou les dispositif(s) de production de la machine.

La cloison gauche 20g présente des dispositifs de positionnement radial 23 en forme de tige. Un des patins (ici 21g) peut aussi servir de dispositif de positionnement.

Les charnières 204a, 204b et 205a, 205b sont inversées par rapport aux charnières 203a et 203b respectivement ce qui permet de les plier vers l'intérieur. Les charnières 203a, 203b, 204a, 204b, 205a, 205b, 210g et 210d sont des charnières dites « piano ».

Les cloisons droite et gauche 20d et 20g présentent un dispositif de positionnement en profondeur constitué d'une excroissance 25 sous forme prismatique venant s'insérer dans un logement 9 placé à l'intérieur de la chambre de fusion 10 de la machine de fabrication additive 1.

Nous allons maintenant décrire le fonctionnement du moyen de réception des poudres 2.

Le moyen de réception des poudres 2 est positionné replié dans la chambre de fusion 10 au-dessus du plateau 3, avant et pendant la fabrication de la pièce 4, dans une zone n'interférant pas avec le ou les dispositif(s) de production de la machine, comme par exemple sur un des côtés de la chambre (cf. figure 5).

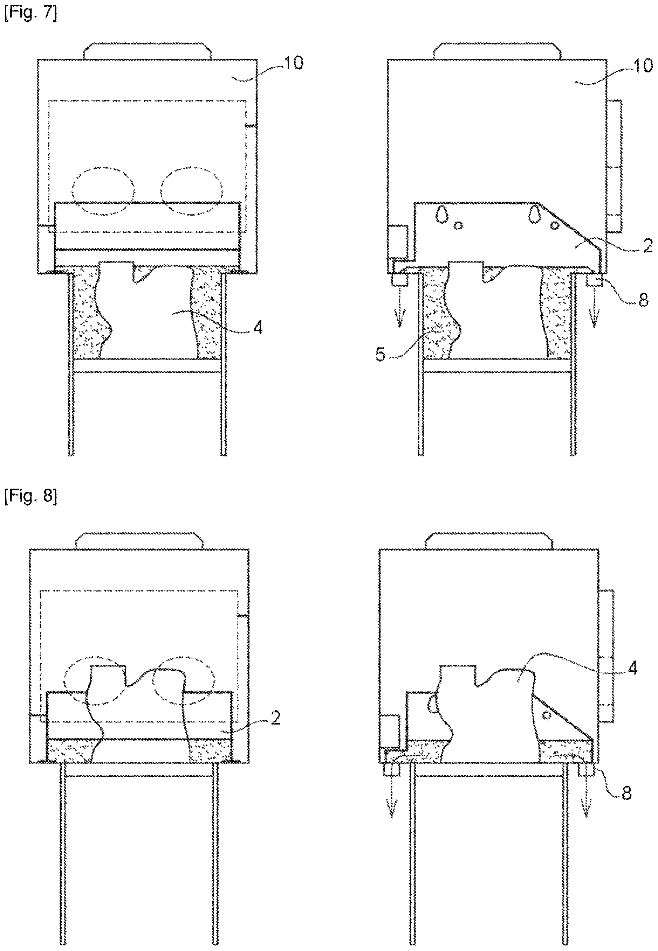

Une fois la fabrication de la pièce 4 terminée, comme visible sur la figure 6, le moyen de réception 2 est déplié manuellement par le biais de l'ouverture 6, posé et positionné en profondeur sur le plateau 3 grâce à l'insertion de l'excroissance 25 dans le logement 9. le plateau 3 remonté avec la pièce et la poudre 5 non fusionnée. La poudre 5 non fusionnée va se répartir dans le moyen de réception 2 et être ensuite évacuée par gravité ou à l'aide d'outillages placés initialement dans la chambre de fabrication, comme par exemple un pinceau, via les dispositifs de récupération des poudres 8, jusqu'à l'évacuation complète de la poudre 5 non fusionnée et le dégagement de la pièce 4, comme illustré figures 7 et 8.

A l'inverse d'un système que l'on pourrait qualifier de rigide, le moyen de réception 2 étant déjà positionné dans la chambre 10, il n'est plus nécessaire d'attendre la consigne de température limite d'accès à la chambre de fusion 10 pour pouvoir mettre en place ledit moyen afin de remonter le plateau 3 et entraîner l'évacuation des poudres 5 vers les dispositifs de récupération des poudres 8, d'où un gain de temps et donc une meilleure utilisation de la machine de fabrication additive 1.

## Revendications

1. Machine de fabrication additive (1) par fusion sur lit de poudre comprenant une enceinte d'une chambre de fusion **caractérisé en ce qu'**elle comprend un moyen de réception de poudres (2) non fusionnées disposé dans l'enceinte et comprenant quatre côtés : une cloison droite (20d) et une cloison gauche (20g), une cloison avant (20a) et une cloison arrière (20b), **caractérisé en ce qu'**au moins deux côtés opposés (20d, 20g ; 20a, 20b) sont chacun constitué de deux parties articulées (200a, 201a ; 200b, 201b) permettant le pliage desdits côtés.

2. Machine de fabrication additive (1) selon la revendication 1 **caractérisé en ce que** la cloison avant (20a) est plus petite en hauteur que la cloison arrière (20b).

3. Machine de fabrication additive (1) selon une des revendications précédentes **caractérisé en ce que** deux patins (21d, 21g) articulés sont placés sur chacune des cloisons droite (20d) et gauche (20g).

4. Machine de fabrication additive (1) selon une des revendications précédentes **caractérisé en ce qu'**au moins une des cloisons droite (20d) ou gauche (20g) comprend un moyen d'accrochage (22).

5. Machine de fabrication additive (1) selon une des revendications précédentes **caractérisé en ce que** les parties articulées (200a, 201a ; 200b, 201b) et/ou les patins (21d, 21g) articulés sont faits avec des charnières pleines de type piano.

6. Machine de fabrication additive (1) selon une des revendications précédentes **caractérisé en ce que** le pliage s'effectue vers l'intérieur et de façon symétrique.

7. Machine de fabrication additive (1) selon une des revendications précédentes **caractérisé en ce que** la cloison arrière (20b) comprend une ouverture (24) en bas.

8. Machine de fabrication additive (1) selon une des revendications précédentes **caractérisé en ce que** les cloisons droite (20d) et gauche (20g) comprennent un dispositif de positionnement arrière (25).

9. Machine de fabrication additive (1) selon une des revendications précédentes **caractérisé en ce qu'**une des cloisons droite (20d) ou gauche (20g) comprend un dispositif de positionnement latéral (23).

## Patentansprüche

1. Additive Fertigungsmaschine (1) durch Schmelzen auf einem Pulverbett, die eine Einfassung einer Schmelzkammer umfasst, **dadurch gekennzeichnet, dass** sie ein Mittel zur Aufnahme von nicht geschmolzenen Pulvern (2) umfasst, das in der Einfassung angeordnet ist und vier Seiten umfasst: eine rechte Trennwand (20d) und eine linke Trennwand (20g), eine vordere Trennwand (20a) und eine hintere Trennwand (20b), **dadurch gekennzeichnet, dass** mindestens zwei gegenüberliegende Seiten (20d, 20g; 20a, 20b) jeweils aus zwei gelenkigen Teilen (200a, 201a; 200b, 201b) bestehen, die das Falten der Seiten ermöglichen.

2. Additive Fertigungsmaschine (1) nach Anspruch 1, **dadurch gekennzeichnet, dass** die vordere Trennwand (20a) in der Höhe kleiner ist als die hintere Trennwand (20b).

3. Additive Fertigungsmaschine (1) nach einem der vorhergehenden Ansprüche, **dadurch gekennzeichnet, dass** an jeder der rechten (20d) und linken (20g) Trennwand zwei gelenkige Kufen (21d, 21g) angeordnet sind.

4. Additive Fertigungsmaschine (1) nach einem der vorhergehenden Ansprüche, **dadurch gekennzeichnet, dass** mindestens eine der rechten (20d) oder linken (20g) Trennwände ein Aufhängemittel (22) umfasst.

5. Additive Fertigungsmaschine (1) nach einem der vorhergehenden Ansprüche, **dadurch gekennzeichnet, dass** die gelenkigen Teile (200a, 201a; 200b, 201b) und/oder die gelenkigen Kufen (21d, 21g) mit massiven Klavierscharnieren versehen sind.

6. Additive Fertigungsmaschine (1) nach einem der vorhergehenden Ansprüche, **dadurch gekennzeichnet, dass** die Faltung nach innen und symmetrisch erfolgt.

7. Additive Fertigungsmaschine (1) nach einem der vorhergehenden Ansprüche, **dadurch gekennzeichnet, dass** die Rückwand (20b) eine Öffnung (24) an der Unterseite aufweist.

8. Additive Fertigungsmaschine (1) nach einem der vorhergehenden Ansprüche, **dadurch gekennzeichnet, dass** die rechte (20d) und die linke (20g) Trennwand eine hintere Positioniervorrichtung (25) umfassen.

9. Additive Fertigungsmaschine (1) nach einem der vorhergehenden Ansprüche, **dadurch gekennzeichnet, dass** eine der rechten (20d) oder linken (20g) Trennwände eine seitliche Positioniervorrichtung (23) umfasst.

## Claims

1. An additive manufacturing machine (1) by fusion on a power bed comprising an enclosure of a fusion chamber, **characterised in that** it comprises a means for receiving unfused powders (2) placed in the enclosure and comprising four sides: a right-hand partition (20d) and a left-hand partition (20g), a front partition (20a) and a rear partition (20b), **characterised in that** at least two opposite sides (20d, 20g; 20a, 20b) each consists of two hinged parts (200a, 201a; 200b, 201b) allowing folding of said sides.

2. The additive manufacturing machine (1) according to claim 1, **characterised in that** the front partition (20a) is smaller in height than the rear partition (20b).

3. The additive manufacturing machine (1) according to one of the preceding claims, **characterised in that** two hinged shoes (21d, 21g) are placed on each of the right-hand (20d) and left-hand (20g) partitions.

4. The additive manufacturing machine (1) according to one of the preceding claims, **characterised in that** at least one of the right-hand (20d) or left-hand (20g) partitions comprises a hooking means (22).

5. the additive manufacturing machine (1) according to one of the preceding claims, **characterised in that** the hinged parts (200a, 201a; 200b, 201b) and/or the hinged shoes (21d, 21g) are made with piano type full length hinges.

6. The additive manufacturing machine (1) according to one of the preceding claims, **characterised in that** folding is carried out inwardly and symmetrically.

7. The additive manufacturing machine (1) according to one of the preceding claims, **characterised in that** the rear partition (20b) comprises an opening (24) at the bottom.

8. The additive manufacturing machine (1) according to one of the preceding claims, **characterised in that** the right-hand (20d) and left-hand (20g) partitions comprise a rear positioning device (25).

9. The additive manufacturing machine (1) according to one of the preceding claims, **characterised in that** one of the right-hand (20d) or left-hand (20g) partitions comprises a side positioning device (23).
